# EUROPÄISCHE PATENTSCHRIFT

(11) **EP 2 311 363 B1**
(45) Veröffentlichungstag und Bekanntmachung des Hinweises auf die Patenterteilung: **05.06.2019**
(21) Anmeldenummer: 10183571.8
(22) Anmeldetag: 30.09.2010
(51) Int. Cl.: A47L 15/42, A47L 15/44, A47L 15/46, A47L 15/00

(54) **Geschirrspülmaschine**
Dishwasher
Lave-vaisselle

(30) Priorität: 14.10.2009 DE 102009045657
(43) Veröffentlichungstag der Anmeldung: 20.04.2011
(73) Patentinhaber: BSH Hausgeräte GmbH, 81739 München (DE)
(72) Erfinder: Groll, Hubert, 89426 Mödingen (DE)

(56) Entgegenhaltungen:
- EP-A1- 2 140 795
- DE-A1- 3 513 640
- DE-A1-102006 043 915
- DE-A1-102007 041 312
- US-A1- 2005 109 070

## Beschreibung

Die vorliegende Erfindung betrifft ein wasserführendes Haushaltsgerät, insbesondere Geschirrspülmaschine oder Waschmaschine, mit einer Überwachungseinrichtung zum Überwachen des Füllstands wenigstens eines Vorratsbehälters, der zum Bevorraten eines Verbrauchsstoffs für mehrere Spülgänge, wie beispielsweise Reinigungsmittel, Klarspüler oder Regeneriersalz dient.

Aus der Praxis sind z.B. Geschirrspülmaschinen bekannt, welche einen oder mehrere Vorratsbehälter zum Bevorraten jeweils eines Verbrauchsstoffes für mehrere Spülgänge umfassen. Der Vorteil derartiger Vorratsbehälter liegt darin, dass die Vorbereitung eines Spülganges zum Spülen von Geschirr für den Bediener vereinfacht ist. So muss er nicht vor jedem einzelnen Spülgang eine Vielzahl von Verbrauchsstoffen zuführen. Dabei hat es sich weitgehend durchgesetzt, Geschirrspülmaschinen mit einem Vorratsbehälter für Klarspüler und mit einem weiteren Vorratsbehälter für Regeneriersalz auszustatten. Wenngleich weniger verbreitet, sind auch Geschirrspülmaschinen bekannt, welche einen separaten Vorratsbehälter für das eigentliche Reinigungsmittel aufweisen.

Derartigen Vorratsbehältern kann ggf. eine Überwachungseinrichtung für den Füllstand des darin bevorrateten Verbrauchsstoffes zugeordnet sein. Solche Überwachungseinrichtungen sind insbesondere dafür vorgesehen, dem Bediener einen niedrigen Füllstand anzuzeigen und ihn so aufzufordern, den jeweiligen Verbrauchsstoff nachzufüllen. Bekannt sind dabei optische und mechanische Füllstandsanzeigen, welche unmittelbar an dem jeweiligen Vorratsbehälter angeordnet sind. Da die Vorratsbehälter jedoch üblicherweise im Spülbehälter der Geschirrspülmaschine angeordnet und daher selbst bei geöffneter Tür nur schwer einsehbar sind, wird ein Mangel bzw. ein Fehlen an Verbrauchsstoff durch den Bediener häufig übersehen, so dass das an sich erforderliche Nachfüllen unterbleibt.

Hierdurch wird in einem nachfolgend durchgeführten Spülgang in aller Regel ein mangelhaftes Spülergebnis erreicht. So führt ein zu geringer Füllstand des Reinigungsmittelbehälters in aller Regel zu einer ungenügenden Reinigungswirkung. Am Geschirr verbleibende Verschmutzungen sind die Folge. Ein zu geringer Füllstand des Klarspülers bewirkt in vielen Fällen ein Auftreten von Flecken an dem Geschirr. Schließlich führt ein Mangel an Regeneriersalz zu einer ungenügenden Leistung der üblicherweise vorgesehenen Entkalkungseinrichtung, was ebenfalls Flecken am Geschirr erzeugen kann. Darüber hinaus kann ein Mangel an Regeneriersalz aber auch zu Schäden an der Geschirrspülmaschine durch Verkalken führen.

Aufgrund dieser erheblichen Konsequenzen sind elektrische Überwachungseinrichtungen für Vorratsbehälter von Geschirrspülmaschinen entwickelt worden. Diese weisen einen Sensor zur Überwachung eines Mindestfüllstands eines Vorratsbehälters und eine außen am Geschirrspüler angeordnete Anzeige auf, so dass der Mangel eines Verbrauchsstoffes auch bei geschlossener Tür der Geschirrspülmaschine erkennbar ist. Die Anzeige ist dabei üblicherweise an einer Bedienblende im oberen Bereich der Türe angeordnet und besteht üblicherweise aus einer Lampe oder Leuchtdiode, deren Aufleuchten dem Bediener signalisiert, dass der Füllstand des betroffenen Verbrauchsstoffes gering ist. Hierdurch wird der Bediener aufgefordert, den Vorratsbehälter aufzufüllen.

Wenngleich eine derartige Anzeige seltener übersehen wird, hat sich in der Praxis doch gezeigt, dass bei vielen Bedienern beim Aufleuchten der Vorratsstoffmangelanzeige ein gewisser Gewöhnungseffekt eintritt, der zum Ignorieren der Aufforderung zum Nachfüllen des Vorratsbehälters führt. So wird das Nachfüllen des Vorratsbehälters im Glauben, der aktuelle Füllstand werde für den nächsten Spülgang noch reichen, immer wieder verschoben, bis der Verbrauchsstoff tatsächlich zur Neige geht. Gleichwohl startet der Bediener die Geschirrspülmaschine immer wieder, so dass die bereits beschriebenen Folgen eintreten können.

Entsprechendes gilt natürlich auch bei einer Haushaltswaschmaschine.

Aus der DE 10 2007 041 312 A1 ist ein wasserführendes Haushaltsgerät mit einer Wasserenthärtungsvorrichtung bekannt, bei der Rohwasser durch einen Ionentauscher leitbar ist und der Ionentauscher mittels einer Regenerationssalzsole regenerierbar ist. Dabei ist eine Anzeige zum Anzeigen einer aus einem Regeneriersalzvorrat ermittelten Restreichweite vorgesehen Ein anderes Beispiel eines wasserführenden Haushaltsgeräte mit einer Überwachungseinrichtung gemäß Anspruch 1 ist aus EP 2 140 795 A1 bekannt, wobei dieses Dokument unter Art. 54(3) EPÜ fällt.

Aufgabe der vorliegenden Erfindung ist es, ein wasserführendes Haushaltsgerät, insbesondere eine Geschirrspülmaschine oder Waschmaschine bereitzustellen, bei welchem die Gefahr einer Fehlbedienung verringert ist.

Gemäß der Erfindung wird diese Aufgabe bei einem wasserführenden Haushaltsgerät der eingangs genannten Art dadurch gelöst, dass die Überwachungseinrichtung zur Ermittlung einer Anzahl verbleibender Spülvorgänge, für welche der Füllstand des wenigstens einen Vorratsbehälters ausreichend ist, ausgebildet ist.

Insbesondere kann die Überwachungseinrichtung mit einer Ausgabeeinrichtung bzw. Signalvorrichtung zur Ausgabe der ermittelten Anzahl verbleibender Spülgänge gekoppelt sein bzw. in Wirkverbindung stehen.

Bei einem erfindungsgemäßen wasserführenden Haushaltsgerät, insbesondere einer Geschirrspülmaschine oder Waschmaschine, ist die Gefahr einer Fehlbedienung wirksam verringert. Die Ausgabe der konkreten Anzahl verbleibender Spülvorgänge, für welche der Füllstand des Vorratsbehälters noch ausreichend ist, ermöglicht es dem Bediener, zweifelsfrei zu erkennen, ob der jeweiligen Verbrauchsstoff zumindest für den nächsten Spülgang noch ausreichend ist. Die Gefahr eines Einschaltens des wasserführenden Haushaltsgeräts bei einem zu niedrigen Füllstand ist gegenüber einem wasserführenden Haushaltsgeräts entsprechend dem Stand der Technik deutlich verringert. Dabei tritt ein Gewöhnungseffekt nicht ein, da sich die konkret ausgegebene Anzahl von Spülgang zu Spülgang verändert. Dies erweckt die Aufmerksamkeit des Bedieners, so dass die Gefahr des Ignorierens der Ausgabe allenfalls gering ist.

Zudem wird der Bediener frühzeitig über die noch möglichen Spülgänge informiert, so dass er rechtzeitig prüfen kann, ob der vorhersehbar nachzufüllende Verbrauchsstoff in seinem Haushalt vorhanden ist, oder ob er diesen erst beschaffen muss. Für Letzteres steht dem Bediener jedoch aufgrund der frühzeitigen Information genügend Zeit zur Verfügung. Spätestens dann, wenn der Wert Null für die Anzahl der verbleibenden Spülvorgänge ausgegeben wird, kann der Bediener den betroffenen Vorratsbehälter dann auffüllen.

Neben der Vermeidung von Bedienungsfehlern bewirkt die erfindungsgemäße Ausgestaltung eines wasserführenden Haushaltsgeräts aber auch eine Verbesserung des Bedienkomforts. So können durch die Ausgabe der konkreten Anzahl der verbleibenden Spülgänge die Nachfüllintervalle bei gleichbleibender Vorratsbehältergröße deutlich verlängert werden, da aufgrund der verbesserten Bedienerinformation - ebenso wie ein zu spätes Auffüllen - auch ein zu frühes Auffüllen oder gar Überbefüllen des Vorratsbehälters verhindert werden kann. Zudem ist der Fall ausgeschlossen, dass der Bediener glaubt, die Maschine nicht mehr benutzen zu können, obwohl noch genug Vorratsstoff für den nächsten Spülgang vorhanden ist.

Die Ermittlung der Anzahl verbleibender Spülvorgänge, für welche der Füllstand des wenigstens einen Vorratsbehälters ausreichend ist, kann vorzugsweise anhand eines Algorithmus, der insbesondere wenigstens einen bekannten Füllstand des Verbrauchsstoffes und den zu erwartenden Verbrauch des Verbrauchsstoffes pro Spülgang berücksichtigt.

Gemäß einer vorteilhaften Weiterbildung der Erfindung ist als Ausgabeeinrichtung bzw. Signalvorrichtung eine optische Anzeigeeinrichtung und/oder akustische Wiedergabeeinheit zur optischen und/oder akustischen Darstellung der Anzahl von verbleibenden Spülgängen vorgesehen. Die Anzeigeeinrichtung kann beispielsweise eine Lampen- oder Leuchtdiodenanordnung oder eine Flüssigkristallanzeige umfassen. So kann die Anzeigeeinrichtung so ausgebildet sein, dass je verbleibendem Spülvorgang eine Lampe oder Leuchtdiode zum Aufleuchten gebracht ist. Im Falle einer Flüssigkeitskristallanzeige (LCD-Anzeige) kann die Anzahl verbleibender Spülvorgänge beispielsweise durch einen Balken variabler Länge dargestellt sein.

Die Ausgabeeinrichtung bzw. Signalvorrichtung kann dabei so ausgebildet sein, dass die Darstellung der Anzahl von verbleibenden Spülgängen bei eingeschaltetem wasserführenden Haushaltsgerät ständig oder in ausgewählten Zeiträumen erfolgt. So ist es beispielsweise möglich, dass die Darstellung lediglich vom Einschalten des wasserführenden Haushaltsgeräts bis zum Starten eines Spülganges durch den Bediener erfolgt.

Gemäß einer bevorzugten Weiterbildung der Erfindung weist die optische Anzeigeeinrichtung eine numerische Anzeige zur Darstellung der Anzahl von verbleibenden Spülgängen auf. Eine numerische Anzeige ermöglicht allgemein die Darstellung von Zahlen. Das bedeutet vorliegend, dass die Anzahl der verbleibenden Spülvorgänge konkret als Zahl ausgebbar ist. Auf diese Weise kann die Anzahl der verbleibenden Spülvorgänge platzsparend und leicht verständlich dargestellt werden.

Entsprechend einer anderen bevorzugten Weiterbildung der Erfindung weist die optische Anzeigeeinrichtung eine alphanumerische Anzeige zur Darstellung der Anzahl verbleibender Spülvorgänge auf. Eine alphanumerische Anzeige ermöglicht allgemein die Darstellung von Zahlen und Buchstaben. Auf diese Weise ist die Darstellung der Anzahl verbleibender Spülvorgänge als Text- und Zahlenkombination möglich. So ist beispielsweise eine Darstellung der Form "Klarspüler reicht noch für 10 Spülgänge" möglich. Hierdurch wird die Bedienerführung weiter verbessert.

Gemäß einer vorteilhaften Weiterbildung der Erfindung weist die Überwachungseinrichtung einen Sensor auf, der auf ein Absinken des Füllstandes unter einen vorgegebenen Mindestfüllstand anspricht. Ein derartiger Sensor kann so ausgebildet sein, dass er ein binäres Signal erzeugt, wobei ein erster Zustand des binären Signals signalisiert, dass der Füllstand des Vorratsstoffes im jeweiligen Vorratsbehälter auf oder über dem vorgegebenen Mindestfüllstand liegt, wobei der andere, zweite Zustand signalisiert, dass der erfasste Füllstand unter dem vorgegebenen Mindestfüllstand liegt. Ein derartiger Sensor kann beispielsweise einen am Vorratsbehälter befestigten Reed-Schalter umfassen, der mit einem in Abhängigkeit von dem Füllstand beweglichen magnetischen Teil zusammenwirkt. Derartige Sensoren sind vergleichsweise einfach aufgebaut. Gleichwohl erlauben sie eine hinreichend genaue Ermittlung der Anzahl verbleibender Spülgänge.

So kann vorgesehen sein, dass beim Ansprechen des Sensors aus dem dann aktuellen Füllstand, der dem vorgegebenen Mindestfüllstand entspricht, und dem Verbrauch an Vorratsstoff je Spülgang, die Anzahl der noch verbleibenden Spülgänge berechnet wird. Die so berechnete Anzahl wird dann an den Bediener ausgegeben. Wird nun ein weiterer Spülgang durchgeführt, so kann die anhand des Mindestfüllstands berechnete Anzahl einfach um den Wert 1 vermindert werden. Diese Dekrementierung kann für jeden weiteren durchgeführten Spülgang fortgesetzt werden. Auf diese Weise ist bei lediglich einer durchgeführten Messung des Füllstands die Ermittlung der Anzahl verbleibender Spülgänge bei weiter abnehmendem Füllstand möglich. Der Mindestfüllstand ist dabei bevorzugt so vorgegeben, dass bei dessen Erreichen noch 5-15 Spülgänge möglich sind. Auf diese Weise erfolgen bis zum Erreichen des Wertes "Null" für die Anzahl der verbleibenden Spülvorgänge lediglich 5-15 Dekrementierungsschritte, so dass die möglicherweise auftretende Differenz zwischen vorhergesagtem und tatsächlichen Verbrauch an Verbrauchsstoff zu keiner größeren Ungenauigkeit bei der Ermittlung der Anzahl verbleibender Spülgänge führt.

Gemäß einer zweckmäßigen Weiterbildung der Erfindung weist die Überwachungseinrichtung einen Sensor auf, der auf ein Steigen des Füllstandes auf oder über einen vorgegebenen Maximalfüllstand anspricht. Auch dieser Sensor kann so ausgebildet sein, dass er ein binäres Signal abgibt, wobei ein Zustand des Signals signalisiert, dass der Füllstand den vorgegebenen Maximalfüllstand erreicht oder übersteigt, wobei der andere Zustand des Signals bedeutet, dass der Füllstand unter dem vorgegebenen Maximalfüllstand liegt. Auch dieser Sensor kann mit einem feststehenden Reed-Kontakt und einem beweglichen Gegenstück ausgebildet sein. Die Signale eines derartigen Sensors können bei der Ermittlung der Anzahl der verbleibenden Spülgänge verwendet werden. Der Hauptzweck liegt jedoch darin, die Information, ob der Vorratsbehälter vollständig gefüllt ist oder nicht, einem Benutzer der Geschirrspülmaschine zur Verfügung zu stellen, was den Bedienkomfort weiter steigert.

Gemäß einer besonders bevorzugten Weiterbildung der Erfindung weist die Überwachungseinrichtung einen Sensor zum Messen des Füllstands auf. Damit ist eine Messung des Füllstandes möglich, so dass die Anzahl der verbleibenden Spülvorgänge jeweils auf der Basis eines aktuellen Messwertes des Füllstandes erfolgen kann. Auf diese Weise kann die Genauigkeit der Angabe der Anzahl verbleibender Spülvorgänge erhöht werden.

Erfindungsgemäß ist die Ermittlungseinrichtung zur Berücksichtigung wenigstens eines verbrauchsbeeinflussenden Parameters bei der Ermittlung der Anzahl verbleibender Spülgänge ausgebildet. Auf diese Weise ist es möglich, die Genauigkeit der Ermittlung der Anzahl verbleibender Spülvorgänge zu erhöhen, da der der Ermittlung zugrundeliegende Verbrauch je Spülgang besser mit dem tatsächlichen Verbrauch in Einklang gebracht werden kann. Verbrauchsbeeinflussende Parameter sind erfindungsgemäß Einstellwerte, wie Spülwassertemperatur ,und Spülprogramm.

In einer bevorzugten Weiterbildung der Erfindung ist die Überwachungseinrichtung so ausgebildet, dass die Ausgabe der ermittelten Anzahl verbleibender Spülvorgänge nur erfolgt, wenn der Füllstand des wenigstens einen Vorratsbehälters unter einen vorgegebenen Mindestfüllstand oder die Anzahl verbleibender Spülgänge unter eine vorgegebene Mindestanzahl abgesunken ist. Auf diese Weise ist sichergestellt, dass eine Ausgabe nur erfolgt, wenn sie für den Bediener auch relevant ist. Dies verhindert einen Gewöhnungseffekt beim Bediener, der zum Ignorieren der Anzeige führen könnte.

In einer zweckmäßigen Weiterbildung der Erfindung ist die Überwachungseinrichtung zur Ausgabe einer Warnmeldung bei einem Absinken des Füllstandes des wenigstens einen Vorratsbehälters unter einen für einen weiteren Spülgang erforderlichen Füllstand ausgebildet. Auf diese Weise kann ein InBetriebnehmen des wasseführenden Haushaltsgeräts bei einem leeren Vorratsbehälter selbst dann verhindert werden, wenn der Bediener die Ausgabe der Anzahl verbleibender Spülvorgänge ignoriert. Dabei erfolgt die Ausgabe der Warnmeldung vorzugsweise über ein akustisches Ausgabemittel. Eine akustische Ausgabe der Warnmeldung verbessert deren Wahrnehmbarkeit.

In einer anderen zweckmäßigen Weiterbildung der Erfindung ist die Überwachungseinrichtung zur Ausgabe einer Hinweismeldung bei einem Ansteigen des Füllstandes des wenigstens einen Vorratsbehälters auf oder über einen vorgesehenen Maximalfüllstand ausgebildet. Die Ausgabe einer derartigen Hinweismeldung kann verhindern, dass beim Nachfüllen des Verbrauchsstoffes zuviel Verbrauchsstoff in den Vorratsbehälter eingefüllt wird, der dann überläuft und sich unkontrolliert in das wasserführende Haushaltsgerät, insbesondere in den Spülbehälter einer Geschirrspülmaschine oder in die Waschtrommel einer Waschmaschine, verteilt. Auf diese Weise können Schäden am wasserführenden Haushaltsgerät durch übergelaufenen Verbrauchsstoff weitgehend vermieden werden. Dabei ist es zweckmäßig, wenn die Warnmeldung über ein akustisches Ausgabemittel erfolgt. Auf diese Weise ist die Wahrnehmung der Warnmeldung auch dann möglich, wenn der Bediener während des Auffüllens des Vorratsbehälters etwaig vorhandene optische Ausgabemittel nicht in seinem Blickfeld hat.

In einer besonders bevorzugten Weiterbildung der Erfindung ist die Überwachungseinrichtung zum Erkennen eines Nachfüllvorganges bei dem wenigstens einen Vorratsbehälter ausgebildet, wobei in Abhängigkeit davon eine automatische Durchführung eines Sonderspülganges zur Beseitigung von überschüssigem Verbrauchsstoff vorgesehen ist. Erfahrungsgemäß wird beim Nachfüllen eines Vorratsbehälters häufig eine nicht unerhebliche Menge an Verbrauchsstoff verschüttet. Zudem wird häufig zu viel Vorratsstoff in den Vorratsbehälter eingefüllt, so dass er überläuft. Dieser überschüssige Verbrauchsstoff gelangt unkontrolliert in das Innere des wasserführenden Haushaltsgeräts, insbesondere der Geschirrspülmaschine oder Waschmaschine. Hierdurch kann es einerseits zu Schäden am wasserführenden Haushaltsgerät und andererseits zu mangelhaften Spülergebnissen im nächsten Spülgang oder weiteren nachfolgenden Spülgängen kommen. Diese negativen Folgen können jedoch durch mindestens einen Sonderspülgang zur Beseitigung des überflüssigen Verbrauchsstoffes beseitigt werden.

Der Sonderspülgang kann separat und sofort durchgeführt werden oder in Verbindung mit einem nachfolgenden Spülgang zum Reinigen von Geschirr. Das Erkennen eines durchgeführten Nachfüllvorgangs kann beispielsweise mittels eines Sensors erfolgen, der auf ein Öffnen bzw. Schließen einer Nachfüllöffnung anspricht. Vorzugsweise erfolgt das Erkennen eines durchgeführten Nachfüllvorganges jedoch durch eine Auswertung einer Änderung des Füllstandes des Vorratsbehälters. In diesem Fall kann auf einen oder mehrere bereits vorhandene Füllstandssensoren zurückgegriffen werden.

Sonstige Weiterbildungen der Erfindung sind in den Unteransprüchen wiedergegeben,

Die Erfindung und ihre Weiterbildungen werden nachfolgend anhand von Zeichnungen näher erläutert. Es zeigen:
- **Figur 1**: eine schematische Darstellung eines vorteilhaften Ausführungsbeispiels einer erfindungsgemäßen Geschirrspülmaschine in Schrägansicht, und
- **Figur 2**: einen schematisierten Funktionsplan der Geschirrspülmaschine von Figur 1.

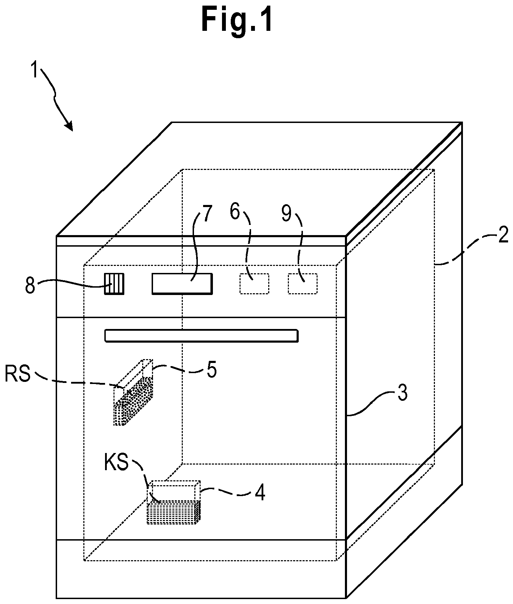

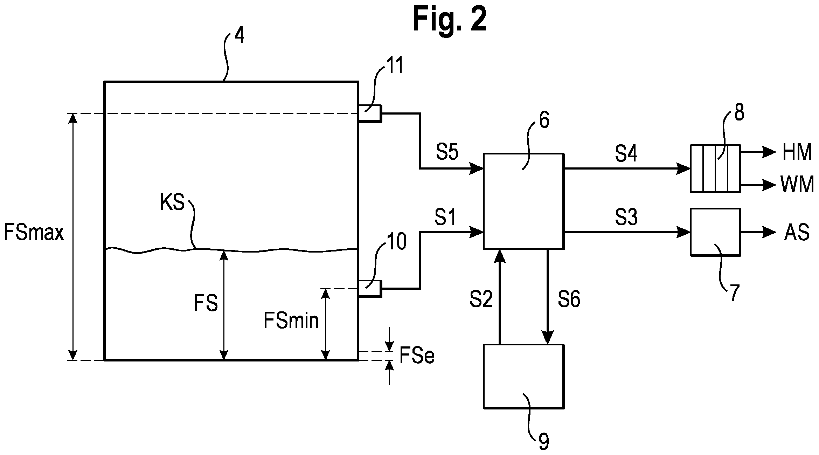

Elemente mit gleicher Funktion und Wirkungsweise sind in den Figuren 1 und 2 jeweils mit denselben Bezugszeichen versehen.

Figur 1 zeigt eine Geschirrspülmaschine 1 als vorteilhaftes Ausführungsbeispiel eines erfindungsgemäßen wasserführenden Haushaltsgeräts in einer schematischen Schrägansicht. Dabei sind nur die für das Verständnis der Erfindung wesentlichen Teile dargestellt. Die Geschirrspülmaschine 1 weist einen schematisch dargestellten Spülbehälter 2 zum Spülen von Geschirr auf. Der Spülbehälter 2 ist durch eine Tür 3 verschlossen, welche zum Beschicken des Spülbehälters 2 mit Geschirr geöffnet werden kann. An der Innenseite der Tür 3 ist ein Klarspülerbehälter 4 zum Bevorraten von Klarspüler KS angeordnet. Dabei fasst der Klarspülerbehälter 4 eine derartige Menge von Klarspüler KS, dass der Klarspüler KS für mehrere Spülgänge, beispielsweise für 50 Spülgänge, ausreicht.

Weiterhin weist die Geschirrspülmaschine 1 einen Regeneriersalzbehälter 5 zum Bevorraten von Regeneriersalz RS auf. Der Regeneriersalzbehälter 5 ist hier im Ausführungsbeisspiel auf der Innenseite einer Seitenwand des Spülbehälters 2 angeordnet. In der Praxis kann er insbesondere in einer Bodenbausgruppe unterhalb des Bodenelements des Spülbehälters 2 untergebracht sein. Das Fassungsvermögen des Regeneriersalzbehälters 5 ist ebenfalls für eine Vielzahl von Spülgängeg ausgelegt.

Bei geöffneter Tür 3 sind der Klarspülbehälter 4 und der Regeneriersalzbehälter 5 zugänglich, so dass sie durch einen Bediener aufgefüllt werden können.

Die Geschirrspülmaschine 1 weist eine Überwachungseinrichtung 6 für den Füllstand des Klarspülerbehälters 4 und für den Füllstand des Regeneriersalzbehälters 5 auf. Diese Überwachungseinrichtung 6 umfasst eine Ermittlungseinheit, welche zur Ermittlung einer Anzahl AS verbleibender Spülgänge, für welche der Füllstand des Klarspülerbehälters und der Füllstand des Regeneriersalzbehälters ausreichend sind. Die ermittelte Anzahl AS verbleibender Spülgänge wird über eine Ausgabeeinrichtung bzw. Signalvorrichtung 7, ausgegeben. Die Ausgabeeinrichtung ist als optische Anzeigeeinrichtung ausgebildet und weist eine alphanumerische Anzeige 7 auf, so dass Klartextmeldungen z.B. der Form "Klarspüler reicht noch für 10 Spülgänge" anzeigbar sind. Die optische Anzeigeeinrichtung 7 ist an der Außenseite der Tür 3 in einem oberen Bereich angeordnet, so dass die ausgegebenen Meldungen gut sichtbar sind. Dabei kann der Bediener den Füllstand der Vorratsbehälter 4, 5 auch bei geschlossener Tür 3 überwachen.

Die Geschirrspülmaschine 1 weist weiterhin ein akustisches Ausgabemittel 8 auf, welches beispielsweise als Summer 8 ausgebildet ist. Auch der Summer 8 ist an der Außenseite der Tür 3 angeordnet.

Die Überwachungseinrichtung 6 hingegen ist geschützt im Inneren der Tür 3 oder in der Bodenbaugruppe der Geschirrspülmaschine unterhalb deren Spülbehälter angeordnet. Dort ist weiterhin eine Steuereinrichtung 9 zum Steuern der Geschirrspülmaschine 1 vorgesehen. Während im Ausführungsbeispiel der Figur 1 die Überwachungseinrichtung 6 und die Steuereinrichtung 9 getrennt sind, könnte die Überwachungseinrichtung 6 auch in die Steuereinrichtung 9 integriert sein.

Figur 2 zeigt die Funktionsweise der Überwachungseinrichtung der Geschirrspülmaschine 1 am Beispiel der Überwachung des Füllstandes FS des Klarspülerbehälters 4. Die Überwachung des Füllstandes des Regeneriersalzbehälters 5 erfolgt in analoger Weise. Die Überwachungseinrichtung kann auch zur Überwachung der Füllstände anderer Vorratsbehälter ausgebildet sein. So könnte beispielsweise ein Vorratsbehälter für Glasschutzmittel, für Deodorantien, für Glasschutzmittel oder für Reinigungsverstärker überwacht werden.

In Figur 2 ist der Klarspülbehälter 4 teilweise mit Klarspüler KS gefüllt. Der aktuelle Füllstand FS ist durch einen Doppelpfeil dargestellt. Ausgehend von der dargestellten Situation sinkt der Füllstand FS bei jedem durchgeführten Spülgang um einen bestimmten Wert. Wenn der Füllstand FS auf oder unter einen vorgegebenen Mindestfüllstand FSmin absinkt, wird dies durch einen Sensor 10 erkannt. Dieser Sensor 10 ist zur Abgabe eines Signals S1 an die Überwachungseinrichtung 6 ausgebildet. Bei dem Signal S1 handelt es sich um ein binäres Signal, wobei das Absinken des Füllstandes FS auf oder unter den vorgegebenen Mindestfüllstand FSmin zu einem Zustandswechsel des Signals S1 führt. Der Zustandswechsel des Signals S1 zeigt der Überwachungseinrichtung 6 folglich an, dass der Füllstand FS den Mindestfüllstand FSmin gerade erreicht oder unterschreitet. Auf diese Weise ist der aktuelle Füllstand FS hinreichend genau bestimmt, um aus einem zu erwartenden Verbrauch je Spülgang die Anzahl AS der verbleibenden Spülgänge zu ermitteln, für welche der Füllstand FS des Klarspülerbehälters 4 noch ausreichend ist.

Um den Verbrauch je Spülgang möglichst genau abschätzen zu können, werden mittels eines Signals S2 verbrauchsbestimmende Parameter von der Steuereinrichtung 9 zur Überwachungseinrichtung 6 übertragen. Bei den verbrauchsbestimmenden Parametern kann es sich um langfristig gleichbleibende Parameter, wie beispielsweise die Härte des zur Verfügung stehenden Wassers, handeln. Berücksichtigt werden können jedoch auch kurzfristige, veränderliche Parameter, wie beispielsweise die Spülwassertemperatur. Es könnte auch eine langfristige Analyse des Nutzerverhaltens durchgeführt werden, so dass mit guter Wahrscheinlichkeit vorhergesagt werden kann, welche Spülwassertemperatur der Nutzer bei zukünftigen Spülgängen vorwählen wird. Analoges gilt betreffend der Wahl eines bestimmten Spülprogramms.

Unter Berücksichtigung der Informationen der Signale S1 und S2 ermittelt die Ermittlungseinrichtung 6 die Anzahl AS der möglichen Spülvorgänge, für welche die Menge an Klarspüler KS im Klarspülerbehälter 4 noch ausreichend ist. Ein mit der Anzahl AS verbleibender Spülgänge korrespondierendes Signal S3 wird der Anzeigeeinrichtung 7 zugeführt, welche daraufhin die Anzahl AS verbleibender Spülvorgänge ausgibt. Bei erneuter Durchführung eines Spülvorganges wird von der Steuereinrichtung 9 mittels des Signals S2 eine entsprechende Information an die Überwachungseinrichtung 6 übermittelt. Daraufhin vermindert die Überwachungseinrichtung 6 die zuvor ermittelte Anzahl AS verbleibender Spülvorgänge um den Wert 1. Diese Anzahl wird nach einer entsprechenden Veränderung des Signals S2 an der Anzeigeeinrichtung 7 dargestellt. Durch diese Vorgehensweise ist es möglich, die Anzahl AS verbleibender Spülvorgänge ohne weitere unmittelbare Erfassung oder Messung des Füllstandes FS im Klarspülbehälter 4 mit hinreichender Genauigkeit zu bestimmen.

Wenn der durch die Überwachungseinrichtung 6 durchgeführte Algorithmus ergibt, dass der Füllstand FS unter einem Füllstand FSe liegt, der zur Durchführung eines weiteren Spülganges erforderlich ist, wird durch die Anzeigeeinrichtung 7 für die Anzahl AS verbleibender Spülvorgänge der Wert "Null" ausgegeben. Zusätzlich veranlasst die Überwachungseinrichtung 6 durch ein entsprechendes Signal S4 das akustische Ausgabemittel 8 zur Ausgabe einer Warnmeldung WM. Hierdurch wird der Bediener mit Nachdruck darauf hingewiesen, dass der Klarspülerbehälter 4 leer oder wenigstens nahezu leer ist, so dass der nächste Spülgang nicht mehr ordnungsgemäß durchgeführt werden kann.

Wenn der Bediener nun wie vorgesehen Klarspüler KS nachfüllt, steigt der Füllstand FS des Klarspülbehälters 4 an. Wenn ein vorgesehener maximaler Füllstand FSmax erreicht ist, so wird dies mittels eines weiteren Sensors 11 detektiert. Dieser Sensor 11 gibt ein binäres Signale S5 an die Überwachungseinrichtung 6 ab. Wenn das Signal S5 einen Zustand annimmt, der ein Erreichen des maximalen Füllstands FSmax signalisiert, so wird das akustische Ausgabemittel 8 durch die Überwachungseinrichtung 6 mittels des Signals S4 veranlasst, eine Hinweismeldung HM auszugeben. Auf diese Weise wird dem Bediener angezeigt, den Nachfüllvorgang zu beenden. Dadurch wird verhindert, dass der Bediener zuviel Klarspüler KS einfüllt, der dann überläuft und in den Innenraum des Spülbehälters gelangt. Hierdurch kann eine Überdosierung von Klarspüler KS in einem folgenden Spülgang verhindert werden. Auf diese Weise wird das Ergebnis des folgenden Spülganges verbessert, gleichzeitig werden Schäden durch Überdosierung an der Geschirrspülmaschine verhindert.

Die Überwachungseinrichtung 6 ist darüber hinaus zum Erkennen, dass ein Nachfüllvorgang durchgeführt wurde, ausgebildet. Sofern eine Zustandsänderung eines der Signale S1 und/oder S5 eine Erhöhung des Füllstandes FS signalisiert, wird diese Information mittels eines Signals S6 zur Steuereinrichtung 9 übertragen. Diese veranlasst dann die Durchführung eines Sonderspülprogramms, welches dazu dient, unkontrolliert in den Spülbehälter 2 gelangten Klarspüler KS zu entfernen. Auf diese Weise wird dem Umstand Rechnung getragen, dass erfahrungsgemäß bei jedem Nachfüllvorgang zumindest einige Tropfen an Klarspüler KS verschüttet werden. Dieser überschüssige Klarspüler KS wird dann mittels des Sonderspülprogramms beseitigt. Das Sonderspülprogramm kann entweder separat oder verbunden mit dem nächsten oder mindestens einem weiteren nachfolgenden, durch den Bediener initiierten Spülgang durchgeführt werden. Auf diese Weise kann das Spülergebnis des nächsten Spülganges verbessert und ein Schaden an der Geschirrspülmaschine verhindert werden.

Die Sensoren 10 und 11 des dargestellten und erläuterten Ausführungsbeispiels könnten ggf. durch einen einzigen Sensor ersetzt werden, der im Bereich vom mindestens erforderlichen Füllstand FSe bis zum maximal vorgesehenen Füllstand FSmax ein mit dem jeweiligen Füllstand FS zuordenbares Signal abgibt. Insbesondere könnte der Sensor so ausgebildet sein, dass im angegebenen Bereich das abgegebene Signal zum Füllstand proportional ist.

Verallgemeinernd betrachtet kann es insbesondere zweckmäßig sein, ein wasserführendes Haushaltsgerät mit einem Vorratsbehälter für einen Verbrauchsstoff bzw. ein Zugabemittel und mit einer Signalvorrichtung bereitzustellen, die die mögliche Anzahl von verbleibenden Spülgängen bis zu einem erforderlichen Nachfüllen des Verbrauchs- bzw. Zugabemittels anzeigt. Dazu ist mindestens ein Sensor vorgesehen, der insbesondere derart ausgebildet ist, dass er den jeweils aktuellen Füllstand des Verbrauchsmittels in dem Vorratsbehälter dynamisch erfassen kann. Dieser gemessene Füllstand korreliert mit einer bestimmten Füllmenge an Verbrauchsmittel im Vorratsbehälter. Die Steuereinrichtung des wasserführenden Haushaltsgeräts ordnet dem jeweilig ermittelten Füllstand z.B. aufgrund von abgespeicherten Tabellen oder sonstigen mathematischen Verknüpfungen dann die verbleibende Anzahl von restlichen Spülgängen zu, die mit diesem derzeitigen Füllstand noch möglich sind.

Beispielsweise kann die Steuereinrichtung dazu die Differenz zwischen dem ursprünglichen, maximalen Füllstand des Verbrauchsmittels im Vorratsbehälter und dem aktuellen, gemessenen Füllstand bilden, sowie diese Differenz durch die Anzahl der ausgehend vom maximalen Füllstand bereits abgearbeiteten bzw. bisher durchgeführten Spülgänge dividieren, so dass sich eine mittlere Verbrauchsmenge pro Spülgang ermitteln lässt. Aus der Division der aktuellen Füllstandsmenge durch diese mittlere Verbrauchsmenge lässt sich dann schließlich die mit Hilfe dieser Verbrauchsmittel- Restmenge voraussichtliche Anzahl von noch durchführbaren Spülgängen bestimmen.

Alternativ dazu kann es ggf. vorteilhaft sein, einen ersten Sensor wie z.B. 11 (siehe Figur 2) zum Erfassen lediglich einer ersten vorgegebenen Füllhöhe des Vorratsbehälters, wenn diese vom Verbrauchs- bzw. Zugabemittel erreicht ist und die dann einem maximalen Füllstand FSmax an Verbrauchsmittel im Vorratsbehälter entspricht, und einen zweiten Sensor wie z.B. 10 zum Erfassen lediglich einer zweiten vorgegebenen Füllhöhe des Vorratsbehälters, wenn diese vom Zugabemittel erreicht ist und die dann einem unterem Füllstand, insbesondere Mindestfüllstand FSmin an Verbrauchsmittel entspricht, bei dem noch ein oder mehrere Spülgänge möglich sind, vorzusehen. Im Ausführungsbeispiel von Figur 2 ist z.B. der erste Sensor 11 höher als der zweite Sensor 10 (in Höhenerstreckung des Vorratsbehälters 4 betrachtet) positioniert. Beide Sensoren 10, 11 sind also jeweils genau einem Füllstand spezifisch zugeordnet. Wenn der zweite Sensor detektiert, dass das Verbrauchsmittel im Vorratsbehälter bis auf den unteren Füllstand, insbesondere Mindestfüllstand abgesunken ist, übermittelt er ein Detektionssignal wie z.B. S1 an die Überwachungseinrichtung wie z.B. 6. Diese Steuereinrichtung teilt dem jeweiligen Benutzer mittels einer entsprechenden akustischen, optischen, haptischen und/oder sonstigen Signalvorrichtung auf direktem oder indirektem Weg die Anzahl der Spülgänge mit, die mit der Restmenge an Verbrauchsmittel noch möglich sind, bis der Vorratsbehälter leer wird. In einer einfachen Ausführungsvariante kann es ausreichend sein, wenn lediglich der untere, zweite Sensor vorgesehen ist, der durch ein entsprechendes Signal der Überwachungseinrichtung indiziert, wenn die Füllmenge an Zugabemittel bzw. Verbrauchsmittel auf diese Marke abgesunken ist. Insbesondere kann es zweckmäßig sein, dieser Füllmarke eine bestimmte Anzahl von - wie z.B. 3 - Spülgängen fix zuzuordnen, die dann noch mit der Restmenge an Verbrauchsmittel aus dem Vorratsbehälter sichergestellt sind. Der obere Sensor wie z.B. 11 kann dabei entfallen.

Zusätzlich oder unabhängig davon, dass von mindestens einem Sensor erkannt wird, ob das Zugabemittel im Vorratsbehälter auf den unteren Füllstand abgesunken ist, ab dem noch ein oder mehrere Spülgänge mit der verbliebenen Restmenge an Zugabemittel möglich sind, ist es zweckmäßig, mittels mindestens eines Sensors diejenige Füllstandsmarke zu detektieren, ab der der Vorratsbehälter maximal mit Zugabemittel befüllt ist. Wird dieser Füllstand vom Sensor detektiert, so übermittelt er ein entsprechendes Detektionssignal an die Überwachungseinrichtung bzw. Steuereinrichtung des wasserführenden Haushaltsgeräts. Die Steuereinrichtung signalisiert dem Benutzer den erreichten maximalen Füllstand über ein oder mehrere Ausgabemittel, insbesondere ein oder mehrere optische und/oder akustische Signaleinrichtungen. Selbstverständlich kann der Sensor sein Detektionssignal auch direkt an eine Signaleinrichtung übermitteln, die dann ein oder mehrere entsprechende Informationen, insbesondere mittels ein oder mehrerer optischer und/oder akustischer Signale, an eine Bedienperson ausgibt. Da mit einem Auffüllen des Vorratsbehälters bis zu dessen maximalem Füllstand in der Praxis oftmals eine Überbefüllung mit Zugabemittel oder Verschütten von Zugabemittel einhergeht, durch die oder das in unkontrollierter Weise Zugabemittel in den Behandlungsraum des jeweiligen wasserführenden Haushaltsgeräts, wie z. B. in den Spülbehälter einer Geschirrspülmaschine, gelangt, kann die Überwachungseinrichtung bzw. Steuereinrichtung zweckmäßigerweise derart ausgebildet sein, dass sie nach dem Erfassen des maximalen Füllstands durch den Sensor vor dem Start eines nachfolgend ausgewählten Betriebsprogramms wie z.B. Geschirrspülprogramms oder Waschprogramms mindestens ein Sonderprogramm initiiert. Dieses kann insbesondere zur Reinigung des Behandlungsraums dienen, um überschüssiges oder verschüttetes Zugabemittel vor Beginn des eigentlichen Betriebsprogramms aus dem Behandlungsraum zu entfernen. Ggf. kann dem ausgewählten Betriebsprogramm eigens ein extra Vorspülprogramm vorgeschaltet sein, durch das Wasser in den Behandlungsraum zum Ausspülen von überschüssigem oder verschüttetem Zugabemittel aus dem Behandlungsraum einläuft und mittels einer Pumpe aus dem Behandlungsraum abgepumpt wird.

### Bezugszeichenliste

- 1: Geschirrspülmaschine
- 2: Spülbehälter
- 3: Tür
- 4: Klarspülerbehälter
- 5: Regeneriersalzbehälter
- 6: Ermittlungseinrichtung
- 7: Ausgabeeinrichtung bzw. Signalvorrichtung
- 8: akustisches Ausgabemittel
- 9: Steuerung
- 10: Sensor für Mindestfüllstand
- 11: Sensor für Maximalfüllstand

- AS: Anzahlverbleibender Spülvorgänge
- FS: Füllstand
- FSe: erforderlicher Füllstand
- FSmax: Maximalfüllstand
- FSmin: Mindestfüllstand
- HM: Hinweismeldung
- KS: Klarspüler
- RS: Regeneriersalz
- S1: Sensorsignal
- S2: Steuersignal für Ausgabeeinrichtung
- S3: Signal
- S4: Steuersignal für akustisches Ausgabemittel
- S5: Sensorsignal
- S6: Signal
- WM: Warnmeldung

## Patentansprüche

1. Geschirrspülmaschine mit einem Spülbehälter (2), der durch eine Tür (3) verschlossen und geöffnet werden kann, und mit einer Überwachungseinrichtung (6) zum Überwachen des Füllstands (FS) wenigstens eines Vorratsbehälters (4, 5), der zum Bevorraten eines Verbrauchsstoffs (KS, RS) für mehrere Spülgänge, wie beispielsweise Reinigungsmittel, Klarspüler (KS) oder Regeneriersalz (RS), dient, wobei die Überwachungseinrichtung (6)
• im Inneren der Tür (3) oder in einer Bodenbaugruppe der Geschirrspülmaschine unterhalb des Spülbehälters (2) angeordnet ist,
• zur Ermittlung einer Anzahl (AS) verbleibender Spülgänge, für welche der Füllstand (FS) des wenigstens einen Vorratsbehälters (4, 5) ausreichend ist, ausgebildet ist und
• zur Berücksichtigung wenigstens eines verbrauchsbeeinflussenden Parameters bei der Ermittlung der Anzahl (AS) verbleibender Spülgänge ausgebildet ist,
**dadurch gekennzeichnet, dass** der wenigstens eine verbrauchsbeeinflussende Parameter ein Einstellwellwert für eine Spülwassertemperatur und/oder ein Spülprogramm ist.

2. Geschirrspülmaschine nach Anspruch 1, **dadurch gekennzeichnet, dass** die Überwachungseinrichtung (6) mit einer Ausgabeeinrichtung (7) zur Ausgabe der ermittelten Anzahl (AS) verbleibender Spülgänge gekoppelt ist.

3. Geschirrspülmaschine nach Anspruch 2, **dadurch gekennzeichnet, dass** als Ausgabeeinrichtung (7) eine optische Anzeigeeinrichtung und/oder akustische Wiedergabeeinheit zur optischen und/oder akustischen Darstellung der Anzahl (AS) von verbleibenden Spülgängen vorgesehen ist.

4. Geschirrspülmaschine nach Anspruch 3, **dadurch gekennzeichnet, dass** die optische Anzeigeeinrichtung (7) eine numerische Anzeige, bevorzugt eine alphanumerische Anzeige (7), zur Darstellung der Anzahl (AS) von verbleibenden Spülgängen aufweist.

5. Geschirrspülmaschine nach einem oder mehreren der vorstehenden Ansprüche, **dadurch gekennzeichnet, dass** die Überwachungseinrichtung (6) einen Sensor (10) aufweist, der auf ein Absinken des Füllstands (FS) des Verbrauchsstoffs (KS, RS) auf oder unter einen vorgegebenen Mindestfüllstand (FSmin) anspricht.

6. Geschirrspülmaschine nach einem oder mehreren der vorstehenden Ansprüche, **dadurch gekennzeichnet, dass** die Überwachungseinrichtung einen Sensor (11) aufweist, der auf ein Ansteigen des Füllstandes (FS) des Verbrauchsstoffs (KS, RS) auf oder über einen vorgegebenen Maximalfüllstand (FSmax) anspricht.

7. Geschirrspülmaschine nach einem oder mehreren der vorstehenden Ansprüche, **dadurch gekennzeichnet, dass** die Überwachungseinrichtung einen Sensor zum Messen des Füllstands aufweist.

8. Geschirrspülmaschine nach einem oder mehreren der vorstehenden Ansprüche, **dadurch gekennzeichnet, dass** die Überwachungseinrichtung (6) so ausgebildet ist, dass die Ausgabe der ermittelten Anzahl (AS) verbleibender Spülgänge nur erfolgt, wenn der Füllstand (FS) des Verbrauchsstoffs (KS, RS) im Vorratsbehälter (4, 5) unter einen vorgegebenen Mindestfüllstand (FSmin) oder die Anzahl (AS) verbleibender Spülgänge unter eine vorgegebene Mindestanzahl abgesunken ist.

9. Geschirrspülmaschine nach einem oder mehreren der vorstehenden Ansprüche, **dadurch gekennzeichnet, dass** die Überwachungseinrichtung (6) zur Ausgabe einer Warnmeldung (WM) bei einem Absinken des Füllstands des Verbrauchsstoffs (KS, RS) im Vorratsbehälter (4, 5) unter einen für einen weiteren Spülgang erforderlichen Füllstand (FSe) ausgebildet ist.

10. Geschirrspülmaschine nach einem oder mehreren der vorstehenden Ansprüche, **dadurch gekennzeichnet, dass** die Überwachungseinrichtung (6) zur Ausgabe einer Hinweismeldung (HM) bei einem Ansteigen des Füllstands (FS) des Verbrauchsstoff (KS, RS) im Vorratsbehälters (4, 5) über einen vorgesehenen Maximalfüllstand (FSmax) ausgebildet ist.

11. Geschirrspülmaschine nach einem oder mehreren der vorstehenden Ansprüche, **dadurch gekennzeichnet, dass** die Überwachungseinrichtung (6) zum Erkennen eines Nachfüllvorgangs bei dem wenigstens einen Vorratsbehälter (4, 5) ausgebildet ist, und dass von der Überwachungseinrichtung (6) in Abhängigkeit vom jeweilig erkannten Nachfüllvorgang eine automatische Durchführung mindestens eines Sonderspülganges zur Beseitigung von überschüssigem Verbrauchsstoff vorgesehen ist.

12. Geschirrspülmaschine nach Anspruch 11, **dadurch gekennzeichnet, dass** die Überwachungseinrichtung (6) einen Nachfüllvorgang durch eine Auswertung einer Änderung des Füllstandes (FS) erkennt.

## Claims

1. Dishwasher with a dishwasher cavity (2) which can be closed and opened by a door (3), and with a monitoring device (6) for monitoring the fill level (FS) of at least one container (4, 5) which is used to store a consumable (KS, RS) for a number of wash cycles, such as for instance detergent, rinse aid (KS) or regenerating salt (RS), wherein the monitoring device (6)
• is arranged in the inside of the door (3) or in a floor assembly of the dishwasher below the dishwasher cavity (2),
• is embodied to determine a number (AS) of remaining wash cycles, for which the fill level (FS) of the at least one container (4, 5) is sufficient, and
• is embodied to take into account at least one use-influencing parameter when the number (AS) of remaining wash cycles is determined,
**characterised in that** the at least one use-influencing parameter is a setting value for a rinsing water temperature and/or a wash program.

2. Dishwasher according to claim 1, **characterised in that** the monitoring device (6) is coupled to an output device (7) for outputting the determined number (AS) of remaining wash cycles.

3. Dishwasher according to claim 2, **characterised in that** a visual display device and/or acoustic reproduction unit is provided as the output device (7) for visually and/or acoustically displaying the number (AS) of remaining wash cycles.

4. Dishwasher according to claim 3, **characterised in that** the visual display device (7) has a numerical display, preferably an alphanumerical display (7), for displaying the number (AS) of remaining wash cycles.

5. Dishwasher according to one or more of the preceding claims, **characterised in that** the monitoring device (6) has a sensor (10), which responds to a drop in the fill level (FS) of the consumable (KS, FS) to or below a predetermined minimum fill level (FSmin).

6. Dishwasher according to one or more of the preceding claims, **characterised in that** the monitoring device has a sensor (11), which responds to a rise in the fill level (FS) of the consumable (KS, RS) to or above a predetermined maximum fill level (FSmax).

7. Dishwasher according to one or more of the preceding claims, **characterised in that** the monitoring device has a sensor for measuring the fill level.

8. Dishwasher according to one or more of the preceding claims, **characterised in that** the monitoring device (6) is embodied such that the determined number (AS) of remaining wash cycles is only output if the fill level (FS) of the consumable (KS, RS) in the container (4, 5) has dropped below a predetermined minimum fill level (FSmin) or the number (AS) of remaining wash cycles has dropped below a predetermined minimum number.

9. Dishwasher according to one or more of the preceding claims, **characterised in that** the monitoring device (6) is embodied to output a warning (WM) when the fill level of the consumable (KS, RS) in the container (4, 5) drops below a fill level (FSe) required for a further wash cycle.

10. Dishwasher according to one or more of the preceding claims, **characterised in that** the monitoring device (6) is embodied to output an informational message (HM) when the fill level (FS) of the consumable (KS, RS) in the container (4, 5) rises above a provided maximum fill level (FSmax).

11. Dishwasher according to one or more of the preceding claims, **characterised in that** the monitoring device (6) is embodied to identify a refilling process in the at least one container (4, 5), and that an automatic execution of at least one separate wash cycle in order to eliminate excess consumable is provided by the monitoring device (6) as a function of the respectively identified refilling process.

12. Dishwasher according to claim 11, **characterised in that** the monitoring device (6) identifies a refilling process by evaluating a change in the fill level (FS).

## Revendications

1. Lave-vaisselle avec une cuve de lavage (2) obturée par une porte (3) et pouvant être ouverte, et avec un dispositif de surveillance (6) pour la surveillance du niveau de remplissage (FS) d'au moins un réservoir (4, 5) servant à stocker un consommable (KS, RS) pour plusieurs cycles de lavage, par exemple le détergent, le liquide de rinçage (KS) ou le sel régénérant (RS), dans lequel le dispositif de surveillance (6)
• est disposé à l'intérieur de la porte (3) ou dans un module au sol du lave-vaisselle sous la cuve de lavage (2),
• est exécuté afin de déterminer un nombre (AS) de cycles de lavage résiduels pour lesquels le niveau de remplissage (FS) de l'au moins un réservoir (4, 5) est suffisant, et
• est exécuté afin de prendre en considération au moins un paramètre influençant la consommation lors de la détermination du nombre (AS) de cycles de lavage résiduels,
**caractérisé en ce que** l'au moins un paramètre influençant la consommation est une valeur de consigne pour une température de l'eau de lavage et/ou un programme de lavage.

2. Lave-vaisselle selon la revendication 1, **caractérisé en ce que** le dispositif de surveillance (6) est couplé à un dispositif d'émission (7) pour l'émission du nombre déterminé (AS) de cycles de lavage résiduels.

3. Lave-vaisselle selon la revendication 2, **caractérisé en ce qu'**un dispositif d'affichage optique et/ou une unité de restitution acoustique pour la représentation optique et/ou acoustique du nombre (AS) de cycles de lavage résiduels est prévu(e) en guide de dispositif d'émission (7).

4. Lave-vaisselle selon la revendication 3, **caractérisé en ce que** le dispositif d'affichage optique (7) présente un affichage numérique, de préférence un affichage alphanumérique (7), pour la représentation du nombre (AS) de cycles de lavage résiduels.

5. Lave-vaisselle selon une ou plusieurs des revendications précédentes, **caractérisé en ce que** le dispositif de surveillance (6) présente un capteur (10) qui réagit à une descente du niveau de remplissage (FS) du consommable (KS, RS) à ou en-deçà d'un niveau de remplissage minimal (FSmin) préalablement établi.

6. Lave-vaisselle selon une ou plusieurs des revendications précédentes, **caractérisé en ce que** le dispositif de surveillance présente un capteur (11) qui réagit à une montée du niveau de remplissage (FS) du consommable (KS, RS) à ou au-delà d'un niveau de remplissage maximal (FSmax) préalablement établi.

7. Lave-vaisselle selon une ou plusieurs des revendications précédentes, **caractérisé en ce que** le dispositif de surveillance présente un capteur pour la mesure du niveau de remplissage.

8. Lave-vaisselle selon l'une des revendications précédentes, **caractérisé en ce que** le dispositif de surveillance (6) est exécuté de telle sorte que l'émission du nombre (AS) déterminé de cycles de lavage résiduels s'effectue uniquement lorsque le niveau de remplissage (FS) du consommable (KS, RS) dans le réservoir (4, 5) descend en-deçà d'un niveau de remplissage minimal (FSmin) préalablement établi ou que le nombre (AS) de cycles de lavage résiduels descend en-deçà d'un nombre minimal préalablement établi.

9. Lave-vaisselle selon une ou plusieurs des revendications précédentes, **caractérisé en ce que** le dispositif de surveillance (6) est exécuté afin d'émettre un message d'avertissement (WM) lors d'une descente du niveau de remplissage du consommable (KS, RS) dans le réservoir (4, 5) en-deçà d'un niveau de remplissage nécessaire (FSe) pour un cycle de lavage supplémentaire.

10. Lave-vaisselle selon une ou plusieurs des revendications précédentes, **caractérisé en ce que** le dispositif de surveillance (6) est exécuté afin d'émettre un message indicatif (HM) lors d'une montée du niveau de remplissage (FS) du consommable (KS, RS) dans le réservoir (4, 5) au-delà d'un niveau de remplissage maximal (FSmax) prévu.

11. Lave-vaisselle selon une ou plusieurs des revendications précédentes, **caractérisé en ce que** le dispositif de surveillance (6) est exécuté afin de détecter un processus de remplissage de l'au moins un réservoir (4, 5), et **en ce que** le dispositif de surveillance (6) prévoit, en fonction du processus de remplissage respectif détecté, une exécution automatique d'au moins un cycle de lavage spécial afin d'éliminer la substance consommable excédentaire.

12. Lave-vaisselle selon la revendication 11, **caractérisé en ce que** le dispositif de surveillance (6) détecte un processus de remplissage via une évaluation d'une modification du niveau de remplissage (FS).
